# EUROPEAN PATENT SPECIFICATION

(11) **EP 3 124 375 B1**
(45) Date of publication and mention of the grant of the patent: **09.05.2018**
(21) Application number: 15178815.5
(22) Date of filing: 29.07.2015
(51) Int. Cl.: B64C 1/12, B64C 1/06

(54) **PANEL MEMBER**
PLATTENELEMENT
ÉLÉMENT DE PANNEAU

(43) Date of publication of application: 01.02.2017
(73) Proprietor: Airbus Operations GmbH, 21129 Hamburg (DE)
(72) Inventor: Hegenbart, Matthias, 21129 Hamburg (DE); Benthien, Hermann, 21129 Hamburg (DE)
(74) Representative: Isarpatent

(56) References cited:
- EP-A1- 1 510 454
- GB-A- 759 529
- US-A1- 2007 095 140
- US-A1- 2011 027 526

## Description

The invention relates to an aircraft panel member presenting a surface area of an aircraft panel structure, and in particular to a window grid for aircraft window openings.

The aircraft frame of an aircraft is complex and comprises different primary and/or secondary structures. The airframe of an aircraft is a mechanical structure which can comprise a plurality of assembled panel members. The primary structure of an airframe can comprise a fuselage, aircraft wings and the tail empennage of the aircraft. The fuselage of an aircraft comprises a fuselage skin assembled to a fuselage frame. Besides these primary structures, an aircraft comprises secondary mechanical structures (for instance spoilers, flaps or stabilizing fairings).

Within an aircraft frame a plurality of different aircraft supply systems are provided. These aircraft supply systems fulfill different functions and supply passengers and/or aircraft components with resources. For example, an air conditioning system supplies fresh air to the passengers within the aircraft. A fuel supply system supplies engines of the aircraft with fuel. Other examples of aircraft supply systems comprise a waste water system, a potable water system, a pneumatic air distribution system or a hydraulic system.

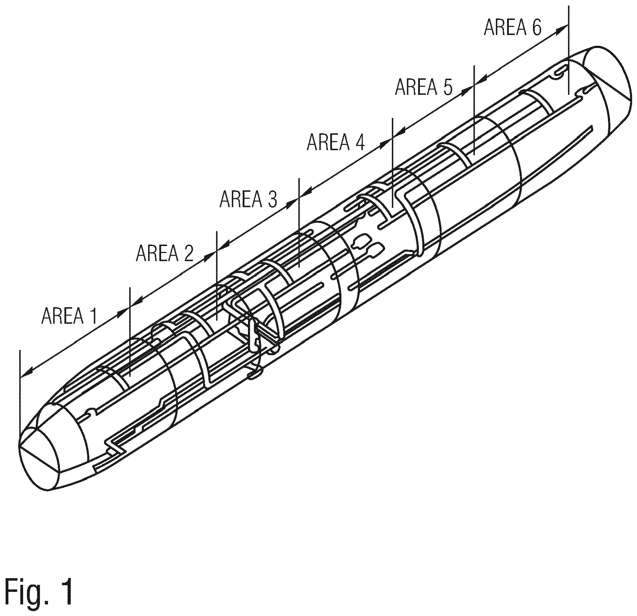

Fig. 1 shows an exemplary air conditioning system mounted in the fuselage of an aircraft frame. The air conditioning system shown in Fig. 1 is only one of several aircraft supply systems within an aircraft. The illustrated exemplary aircraft supply system, i.e. air conditioning system, comprises a plurality of cooling and heating pipes or tubes mounted in the interior of the aircraft fuselage as shown. The aircraft frame forming a mechanical structure has additional components for stiffening the aircraft frame such as frame elements and/or stringer elements to which the aircraft skin panel elements are mounted. The aircraft frame comprise frame elements and stringer elements which are oriented rectangular and which can be joined together with fastening means such as rivets and bolts. Frame elements and stringer elements are provided to carry the skin elements and to stiffen the aircraft panel structure of the aircraft. Documents EP1510454, GB759529, US2011/027526 or US2007/095140 all show aircraft panel members comprising integrated conduits, manufactured by moulding, laying and curing composite materials. Accordingly, it is an object of the present invention to provide an panel improved member for an aircraft panel structure.

This object is achieved by a panel member comprising the features of claim 1.

The invention provides according to a first aspect an aircraft panel member presenting a surface area of an aircraft panel structure, said panel member comprising at least one medium conduit which is integrally formed with said panel member, wherein said medium conduits are configured to conduct the same or different media and configured to stiffen said aircraft panel structure, said panel member being an additive manufactured, 3-D-printed panel member and wherein said panel member comprises protrusions fitting into corresponding recessions of other panel members to provide jigsaw puzzle mechanical links with the other panel members. An advantage of the panel member according to the first aspect of the present invention is that the weight of the aircraft can be significantly reduced since the number of separate pipes and/or supply tubes used for aircraft supply systems is minimized.

Further by reducing the number of supply pipes and/or supply tubes more space within the aircraft frame becomes available which can be used for enlarging the passenger room and/or cargo room.

Preferred embodiments of the panel member according to the first aspect of the present invention are defined in the subclaims.

In a possible embodiment of the panel member according to the first aspect of the present invention, the integrally formed medium conduits are configured to stiffen a periphery of at least one opening in said aircraft panel structure.

In a possible embodiment of the panel member according to the first aspect of the present invention, the integrally formed medium conduits are configured to stiffen the periphery of at least one aircraft window opening or the periphery of an aircraft door opening.

In a further possible embodiment of the panel member according to the first aspect of the present invention, the panel member is an exterior panel member which presents a surface area of an exterior aircraft panel structure.

In a further possible embodiment of the panel member according to the first aspect of the present invention, the panel member is an interior panel member of an interior aircraft panel structure.

In a further possible embodiment of the panel member according to the first aspect of the present invention, the panel member is formed by a flat plate with at least one integrally formed medium conduit.

In a further possible embodiment of the panel member according to the first aspect of the present invention, the panel member is a curved plate with at least one integrally formed medium conduit.

In a still further possible embodiment of the panel member according to the first aspect of the present invention, the panel member is a hollow cylinder with at least one integrally formed medium conduit.

In a further possible embodiment of the panel member according to the first aspect of the present invention, the at least one stiffening medium conduit is configured to conduct a medium of an aircraft supply system.

In a further possible embodiment of the panel member according to the first aspect of the present invention, the panel member further comprises integrated channels to conduct the same or different media of aircraft supply systems.

In a possible embodiment of the panel member according to the first aspect of the present invention, the media conducted by the stiffening medium conduits and/or by said integrated channels comprise water, in particular potable water or waste water, a gas, in particular pressurized air, a fluid, hydraulic oil, a fuel, in particular kerosine, electrical power supply current and/or information data.

In a further possible embodiment of the panel member according to the first aspect of the present invention, the panel member comprises a fuselage panel member of an aircraft fuselage.

In a further possible embodiment of the panel member according to the first aspect of the present invention, the panel member comprises a wing panel member of an aircraft wing.

In a further possible embodiment of the panel member according to the first aspect of the present invention, the panel member comprises an empennage panel member of an aircraft empennage.

In a further possible embodiment of the panel member according to the first aspect of the present invention, the panel member comprises at least one integrated insulation layer for thermal insulation.

In a still further possible embodiment of the panel member according to the first aspect of the present invention, the panel member comprises at least one integrated insulation layer for electrical insulation.

In a further possible embodiment of the panel member according to the first aspect of the present invention, the panel member comprises an integrated insulation layer for sound and/or vibration insulation.

In a still further possible embodiment of the panel member according to the first aspect of the present invention, the panel member comprises at least one integrated insulation layer for electromagnetic wave insulation.

In a further possible embodiment of the panel member according to the first aspect of the present invention, the panel member comprises at least one integrated heating and/or cooling protrusion.

In a further possible embodiment of the panel member according to the first aspect of the present invention, the panel member comprises a fibre reinforced polymer, composite material, in particular a carbon fibre reinforced polymer, CFRP, a glass fibre reinforced polymer, GFRP.

In a further possible embodiment of the panel member according to the first aspect of the present invention, the panel member is made from monolithic materials comprising plastic materials and/or metals.

In a possible embodiment of the panel member according to the first aspect of the present invention, the at least one stiffening medium conduit is force flow oriented along a stress trajectory.

In a further possible embodiment of the panel member according to the first aspect of the present invention, the force flow oriented stiffening medium conduit integrally formed with said panel member comprises a constant or variable cross section along the stress trajectory.

The invention further provides according to a second aspect a window grid for aircraft window openings, wherein said window grid is formed by panel members according to the first aspect of the present invention.

The invention further provides according to a third aspect an aircraft supply system of an aircraft, wherein said aircraft supply system comprises medium conduits each configured to conduct a medium, wherein said medium conduits are integrally formed within panel members according to the first aspect of the present invention.

In a possible embodiment of the aircraft supply system according to the third aspect of the present invention, the medium conduits and/or channels integrally formed within the panel members comprise integrated functional elements configured to perform a function on the basis of the media conducted by said conduits and/or channels.

In a possible embodiment of the aircraft supply system, the functional elements of said medium conduits and/or medium channels within the panel members comprise valve elements, sensor elements, actuator elements, flow control elements, structural health monitoring elements, steering and control elements, cooling and/or heating elements, media support elements, filter elements and/or pressure control elements.

In a possible embodiment of the aircraft supply system according to the third aspect of the present invention, the aircraft supply system comprises any of the following systems: an air conditioning system, a medium supply system a waste water system, a potable water system, a pneumatic air distribution system, a hydraulic system, a power supply system, a data transport system, an energy storage system, an energy transport system, an energy harvesting system, and/or a medium storage system.

The invention further provides according to a fourth aspect an aircraft fuselage comprising assembled panel members according to the first aspect of the present invention.

Different aspects of the present invention are described in the following with reference to the enclosed figures in more detail.
- Fig. 1: shows a conventional air conditioning system within an aircraft fuselage according to the state of the art;
- Figs. 2, 3, 4: show perspective views on different exemplary embodiments of a panel member according to the first aspect of the present invention;
- Figs. 5, 6: show perspective views on exemplary curved embodiments of panel members according to the first aspect of the present invention;
- Figs. 7, 8: show further exemplary embodiments of flat panel members according to the first aspect of the present invention;
- Figs. 9, 10: show perspective views on exemplary embodiments of cylindrical panel members according to the first aspect of the present invention;
- Figs. 11, 12: show perspective views on exemplary embodiments of panel members with an integrated insulation layer and/or cooling protrusions;
- Fig. 13: shows a further perspective view on an exemplary embodiment of a panel member with integrally formed medium conduits on both sides;
- Fig. 14: shows a perspective view on a further exemplary embodiment of a panel member with medium conduits on both sides connected to each other by an integrated medium channel;
- Fig. 15: shows a further perspective view on an exemplary embodiment of a panel member according to the first aspect of the present invention comprising a plurality of differently shaped integrated medium channels;
- Fig. 16: shows a perspective view on an aircraft panel structure comprising two panel members according to the first aspect of the present invention connected to each other by a jigsaw puzzle link;
- Fig. 17: shows a perspective view on a further exemplary aircraft panel structure comprising several assembled panel members according to the first aspect of the present invention;
- Figs. 18, 19: show cross section views through an aircraft panel structure comprising several panel members according to the first aspect of the present invention;
- Fig. 20: shows a perspective view on an exemplary embodiment of an aircraft panel structure comprising assembled panel members according to the first aspect of the present invention;
- Figs. 21A, 21B, 21C: shows a further perspective views of exemplary embodiments of a panel member according to the first aspect of the present invention comprising integrated functional elements;
- Figs. 22, 23: show perspective views of fuselage panel structures comprising assembled panel members according to the first aspect of the present invention;
- Fig. 24: shows a further perspective view on an aircraft fuselage comprising an aircraft panel structure consisting of panel members according to the first aspect of the present invention;

- Fig. 25: shows a view of a fuselage aircraft panel structure comprising assembled panel members according to the first aspect of the present invention;
- Fig. 26: shows a further exemplary embodiment of a fuselage aircraft panel structure comprising panel members according to the first aspect of the present invention;
- Fig. 27: shows a further exemplary fuselage aircraft panel structure comprising panel members according to the first aspect of the present invention;
- Fig. 28: shows a perspective view of an exemplary embodiment of a panel member according to the first aspect of the present invention comprising integrated channels and/or integrated insulation layers;
- Fig. 29: illustrates a trajectory-based layout of an aircraft panel structure comprising panel members according to the first aspect of the present invention; and
- Fig. 30: shows a further view on a trajectory-based layout of an aircraft panel structure comprising panel members according to the first aspect of the present invention.

Within the above figures, same reference signs indicate the same or similar components as long as nothing to the contrary is mentioned.

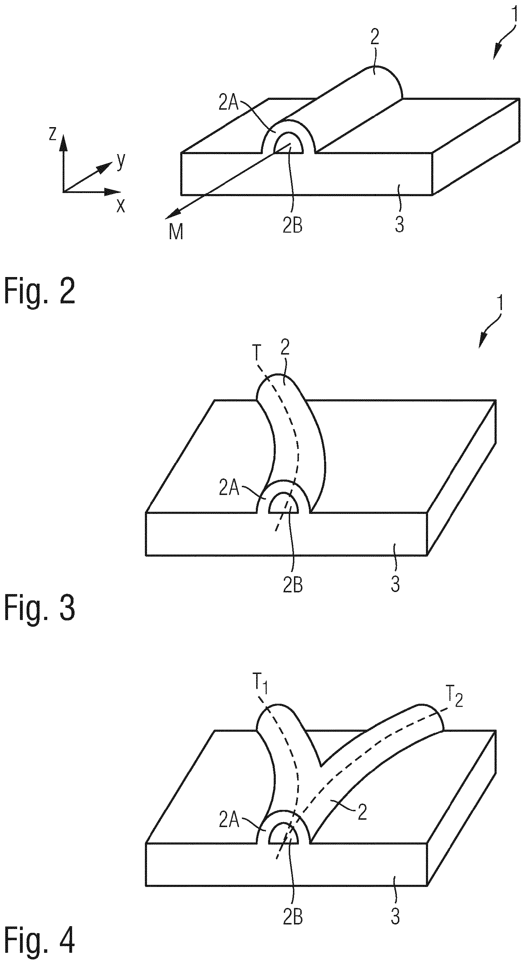

Fig. 2 illustrates a possible exemplary embodiment of a panel member 1 according to the first aspect of the present invention. Fig. 2 shows a panel member 1 presenting a surface area of an aircraft panel structure APS. In the illustrated embodiment, the panel member 1 is a flat panel member comprising a medium conduit 2 integrally formed with a panel member 1. The medium conduit 2 comprises a conduit wall 2A defining a medium conduit core 2B through which a medium M of an aircraft supply system ASS can flow. In the illustrated embodiment, the medium conduit 2 is integrally formed with a plate 3 of said panel member 1. In the illustrated embodiment, the panel member 1 comprises only one medium conduit 2. In alternative embodiments, the panel member 1 can comprise several conduits 2 on the same or different sides of the plate 3. The different medium conduits 2 are configured to conduct the same or different media and are further configured to stiffen the aircraft panel structure at the same time. The panel member 1 shown in Fig. 2 can form an exterior panel member which presents a surface area of an exterior aircraft panel structure or an interior panel member of an interior aircraft panel structure. In the embodiment shown in Fig. 2, the panel member 1 comprises a flat plate 3 defining together with the medium conduit wall 2A the medium conduit core 2B of the medium conduit 2. The stiffening medium conduits 2 are configured to conduct the same or different media of the same or different aircraft supply systems. The media M conducted in the stiffening medium conduits 2 can comprise a fluid or liquid such as water, in particular potable water or waste water of a water supply system of the aircraft. The medium M can also comprise a fuel, in particular kerosine, for supplying combustion engines or turbines of the aircraft. The transported medium M can further comprise hydraulic oil of a hydraulic system of the aircraft. The medium M can comprise a gas, in particular pressurized air. The transported medium M can also comprise an electrical power supply current and even information data of a data transport system of the aircraft.

The exemplary panel member 1 illustrated in Fig. 2 is an additive manufactured panel member. The panel member 1 can consist of different materials which can comprise a bionic topology, topography or shape which provides efficient force and stress transfer. In a possible embodiment, the panel member 1 as shown in Fig. 2, is printed by a three-dimensional printer. It can be made of the same or different materials. In a possible embodiment, the panel member 1 as shown in Fig. 2 comprises a fibre reinforced polymer, composite material such as carbon fibre reinforced polymer, CFRP, or a glass fibre reinforced polymer, GFRP. The panel member 1 can also be formed by one or several monolithic materials comprising plastic materials or metals.

The panel member 1 as shown in Fig. 2 can be a fuselage panel member of an aircraft fuselage, a wing panel member of an aircraft wing and/or an empennage panel member of an aircraft empennage of an aircraft. In the exemplary embodiment of Fig. 2, the panel member 1 comprises a single medium conduit 2 in y-direction.

Fig. 3 shows an exemplary embodiment of a panel member 1 where the medium conduit 2 is force flow oriented along a stress trajectory T. The stress trajectory T is curved in the illustrated embodiment. Along this curved trajectory, the medium conduit 2 is integrally formed with the flat plate 3. In the illustrated embodiment, the force flow oriented stiffening medium conduit 2 integrally formed with the panel member comprises a constant cross section along the stress trajectory T. In an alternative embodiment, the force flow oriented stiffening medium conduit 2 can also comprise a variable cross section along the stress trajectory T.

Fig. 4 shows a further exemplary embodiment of a panel member 1 according to the first aspect of the present invention. In the illustrated exemplary embodiment, the medium conduit 2 splits along two different stress trajectories T1, T2.

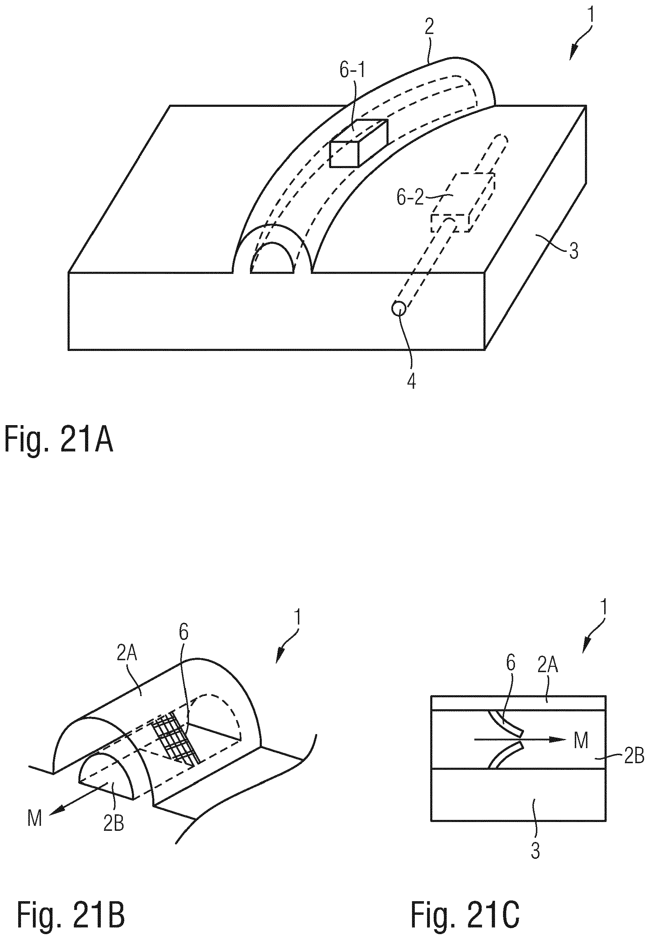

The medium conduit 2 of the panel member 1 as illustrated in the embodiments of Figs. 2, 3, 4 is configured not only to conduct the same or different media M of the same or different air supply systems ASS, but also to stiffen the aircraft panel structure APS at the same time. The medium conduits 2 are adapted to transport a medium M, in particular a fluid or a gas. For instance, the medium conduits 2 can be used to transport a cooling medium like liquid nitrogen, oxygen, or hydrogen. Further, the medium conduits 2 can be used to transport pressurized media for power transfer, in particular pressurized air. In a possible embodiment, the medium conduit core 2B defined by the medium conduit wall 2A of the medium conduit 2 is void defining a volume for medium transport. In a further possible embodiment, the volume 2B of the conduit 2 defined by the medium conduit wall 2A comprises an integrally formed material generated for example by an additive manufacturing three-dimensional printer and configured to conduct an electrical power supply current and a power supply system and/or information data of a data transport system. For example, the medium transport material of the conduit core 2B can comprise a medium configured to transport electrical current or light signals. The light signals or electronic signals transported in the core 2B of the medium conduit 2 can for instance be split along the stress trajectories T1, T2 as illustrated in Fig. 4. In an alternative embodiment, the medium conduit core 2B can comprise an electrically conductive material for transporting an electronic signal and/or a power supply current. In a possible embodiment, the electronic or optical signals transported through the medium conduit core 2B can be connected to electronic and/or optical components which are integrated in the plate 3 and/or the medium conduit wall 2A of the medium conduit 2. The transported electrical current can be a supply current for an integrated functional element as illustrated in Fig. 21.

The panel member 1 according to the first aspect of the present invention is configured such that it serves simultaneously two different purposes, i.e. conducting the same or different media M of the same or different aircraft supply systems ASS and to stiffen the mechanical aircraft panel structure APS along the stress trajectories T at the same time. The aircraft panel member 1 can be located in the fuselage, wing or empennage or any other location of the aircraft frame.

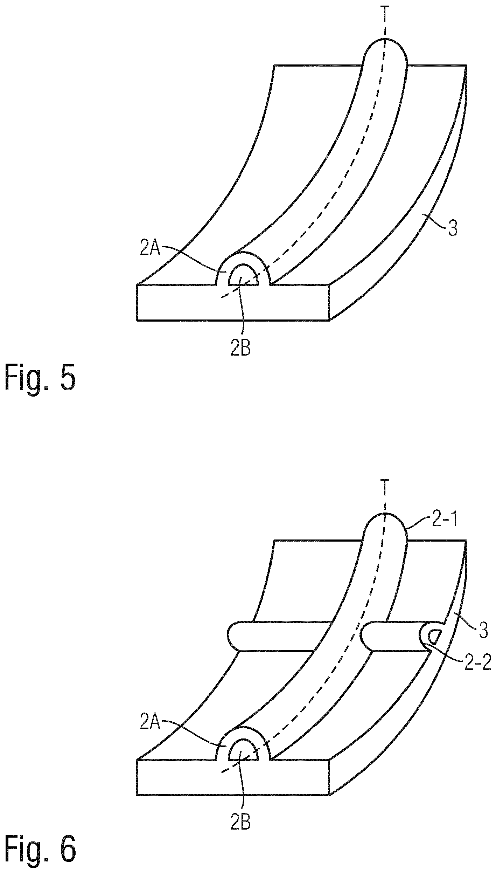

Fig. 5 shows a further exemplary embodiment of panel member 1 according to the first aspect of the present invention. In the illustrated embodiment, the aircraft panel member 1 comprises a curved plate 3 with an integrally formed curved medium conduit 2. The illustrated aircraft panel member 1 can for instance comprise a fuselage skin member of an aircraft fuselage.

Fig. 6 shows a similar exemplary embodiment of a panel member with a curved plate 3 having two perpendicular medium conduits 2-1, 2-2. For example, the second medium conduit 2-2 can be formed along the longitudinal axis of the aircraft fuselage. The aircraft panel member 1 shown in Fig. 5 can also form a skin member of an aircraft fuselage.

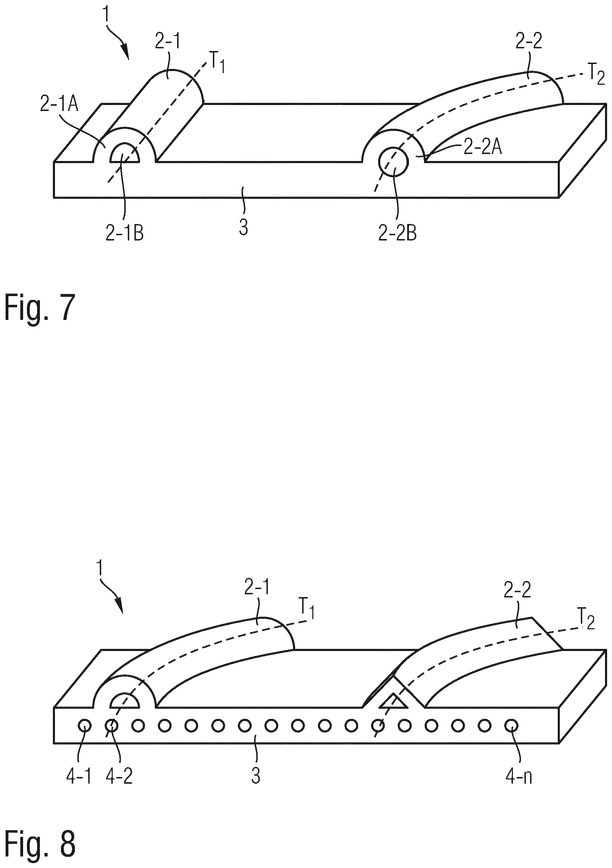

Fig. 7 shows a further exemplary embodiment of a panel member 1 according to the first aspect of the present invention. In the illustrated embodiment, the panel member 1 comprises two different medium conduits 2-1, 2-2 which are force flow oriented along two different stress trajectories T1, T2. Further, in the illustrated exemplary embodiment, the cross sections of the two different medium conduits cores 2-1B, 2-2B are different and adapted to the medium M transported by the respective medium conduit 2 and/or other requirements of the respective aircraft supply system.

Fig. 8 shows a further exemplary embodiment of a panel member 1 comprising two different medium conduits 2-1, 2-2 conducting the same or different media. In the shown exemplary embodiment, the panel member 1 further comprises integrated channels 4-i which are also configured to conduct the same or different media M of the same or different aircraft supply systems. As can be seen in Fig. 8, channels 4-i are integrated in the flat plate 3 of the panel member 1.

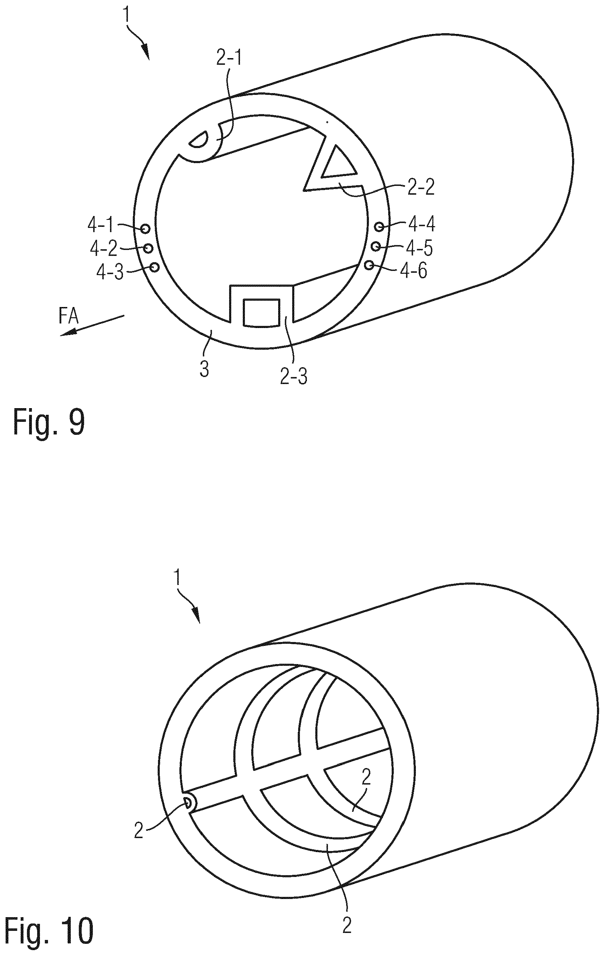

Fig. 9 shows a further exemplary embodiment of a panel member 1 according to the first aspect of the present invention. In the illustrated embodiment, the panel member 1 has the form of a hollow cylinder. In the shown embodiment, in the inner side of the hollow cylinder, three different medium conduits 2-1, 2-2, 2-3 with different cross sections are provided in a longitudinal direction of the cylinder. The illustrated panel member 1 can comprise a panel member of an aircraft fuselage which can consist of several cylindrical panel members 1 along the fuselage axis FA as shown in Fig. 9. The hollow cylinder 3 can also comprise integrated medium channels 4 as shown in Fig. 9.

Fig. 10 shows a further exemplary embodiment of a fuselage panel member 1 having a medium conduit 2 along the fuselage axis FA and additional curved medium conduits 2 perpendicular to the fuselage axis FA. The medium conduits 2 shown in Fig. 9 are provided to stiffen the aircraft panel structure APS of the aircraft fuselage.

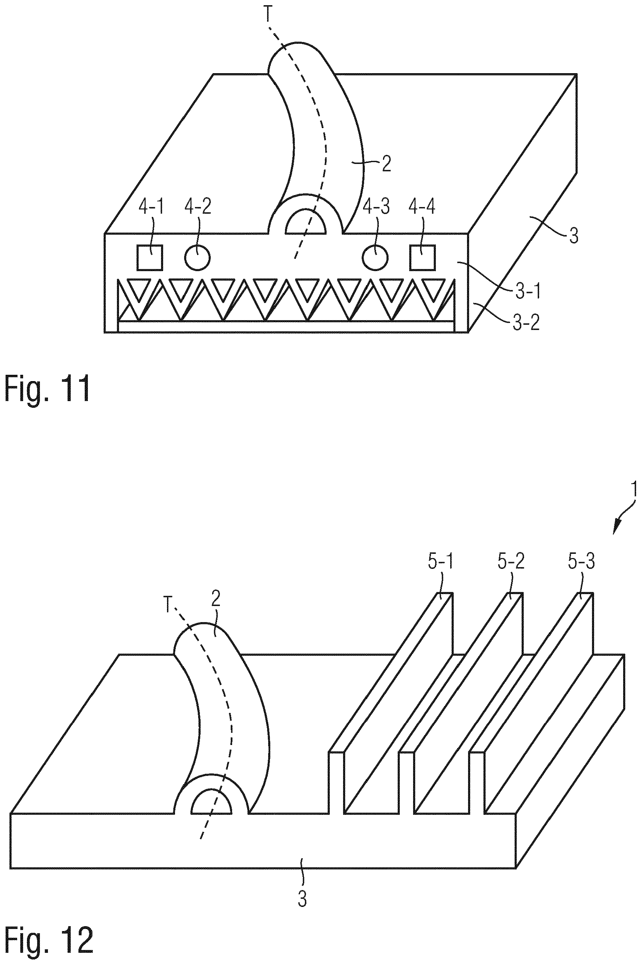

Fig. 11 shows a further exemplary embodiment of a panel member 1 according to the first aspect of the present invention. In the illustrated embodiment, the plate 3 of the panel member 1 comprises several layers. In a first layer 3-1, several integrated channels 4-i with different cross sections are provided and configured to conduct the same or different media of the same or different aircraft supply systems. As can be seen in Fig. 11, the illustrated exemplary panel member 1 comprises a further integrated plate layer 3-2 which can form an insulation layer. In the illustrated embodiment, the insulation layer can be provided for thermal insulation comprising chambers filled with insulating gas such as air. In an alternative embodiment, the panel member 1 can comprise several insulation layers 3-i integrally formed with the plate 3 of the panel member. In a possible embodiment, the panel member 1 can comprise at least one integrated electrical insulation layer adapted to perform an electrical insulation. In a still further possible embodiment, the panel member 1 can comprise an integrated insulation layer for sound or acoustic insulation and/or for damping vibrations. In a still further possible embodiment, the panel member 1 can comprise an integrated insulation layer for electromagnetic wave insulation. The insulation layer can be manufactured by additive manufacturing, for instance with foam, a monolithic material or a composite material. Alternatively, the insulation layer can also be made from aerogels. The different layers 3-i of the plate 3 of the panel member 1 can be formed by the same or different materials in an additive manufacturing process. The layers can comprise a fibre reinforced polymer, plastic material or a metal alloy. In a possible embodiment, the material can also comprise an electroactive polymer providing artificial actuators which are configured to exert mechanical force on the respective aircraft panel structure. The insulation layers such as the insulation layer 3-2 as illustrated in Fig. 11 can be designed such that it has minimum weight, but provides efficient insulation, in particular thermal insulation, at the same time.

Fig. 12 shows a further exemplary embodiment of panel member 1 according to the first aspect of the present invention. In the illustrated embodiment, the plate 3 of the panel member 1 comprises protrusions 5-i. These protrusions 5-i can comprise integrated heating and/or cooling protrusions.

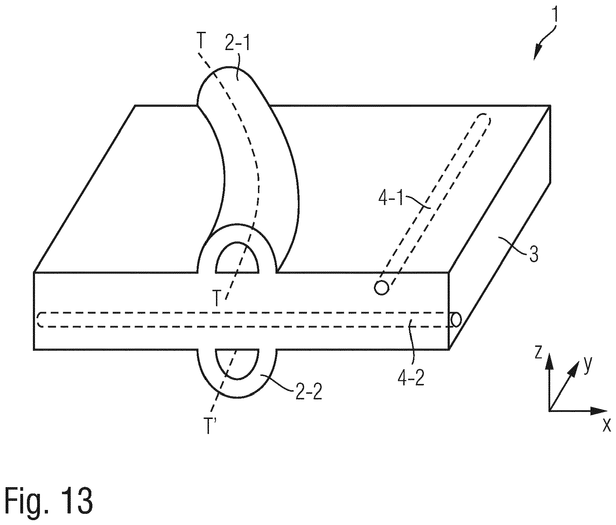

Fig. 13 shows a further exemplary embodiment of panel member 1 according to the first aspect of the present invention. In the illustrated embodiment, the panel member 1 comprises two medium conduits 2-1, 2-2 located on opposing sides of the panel member plate 3 along two parallel stress trajectories T, T'. Further, the exemplary panel member 1 comprises integrally formed channels 4-1, 4-2 in an x- and y-direction within the flat panel plate 3 as illustrated in Fig. 13.

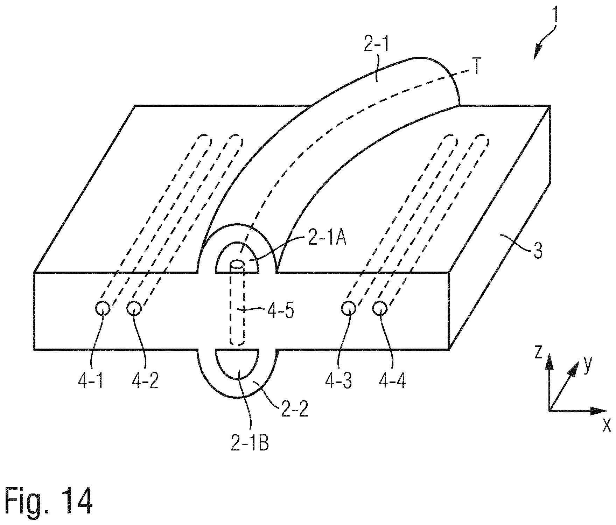

Fig. 14 shows a further exemplary embodiment of a panel member 1 according to the first aspect of the present invention. In the illustrated embodiment, the panel member 1 comprises two medium conduits 2-1, 2-2 which comprise medium cores 2-1A, 2-1B being connected through a vertical medium channel 4-5 along the z-axis as illustrated in Fig. 14. Other medium channels 4-4 integrally formed within the plate 3 along the y-axis are also illustrated.

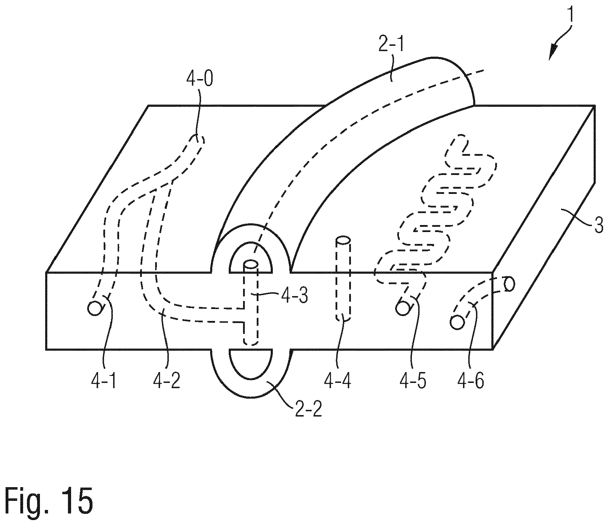

Fig. 15 shows a further exemplary embodiment of a panel member 1 according to the first aspect of the present invention. In the shown example, the panel member 1 comprises a plurality of different medium channels 4-i of the same or different aircraft supply systems integrally formed within the plate 3 of the panel member 1. These medium channels 4-i can have different directions and forms as shown in Fig. 15, for example a meander form such as the medium channel 4-5 or a curved form such as the medium channels 4-1, 4-2 both connected to a medium channel 4-0. The medium channel 4-3 connects two cores 2-1A, 2-2A of two different medium conduits 2-1, 2-2 integrally formed on the front and rear side of the plate 3. The medium channel 4-4 forms a conduit through the plate 3 as shown in Fig. 15.

The medium channel 4-6 forms a tube between two side surfaces of the flat plate 3 as shown in Fig. 15.

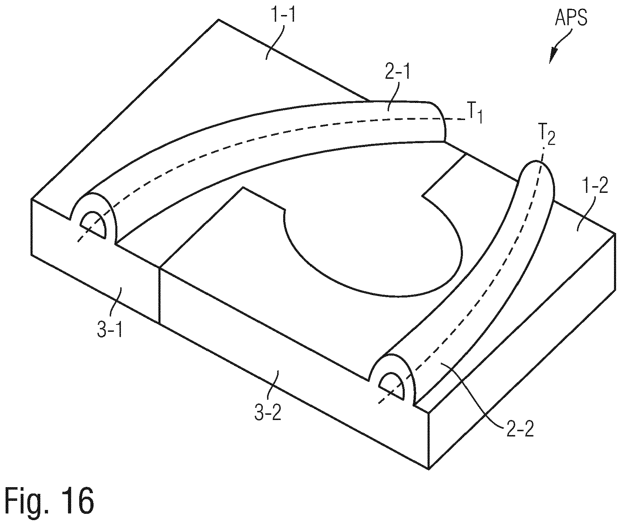

Fig. 16 shows a perspective view on an aircraft panel structure APS comprising two assembled panel members 1 according to the first aspect of the present invention. The first panel member 1-1 comprises a medium conduit 2-1 along a first stress trajectory T1, and the second panel member 1-2 comprises a second medium conduit 2-2 along stress trajectory T2. In the illustrated embodiment, the two panel members 1-1, 1-2 are formed such that their plates 3-1, 3-2 fit together by means of a jigsaw puzzle link as illustrated in Fig. 16. As can be seen in Fig. 16, the forms of the panel member plates 3-1, 3-2 are complementary to each other so that they can be easily assembled to form the aircraft panel structure APS illustrated in Fig. 16. Both panel members 3-1, 3-2 are manufactured in an additive manufacturing process by a three-dimensional printer.

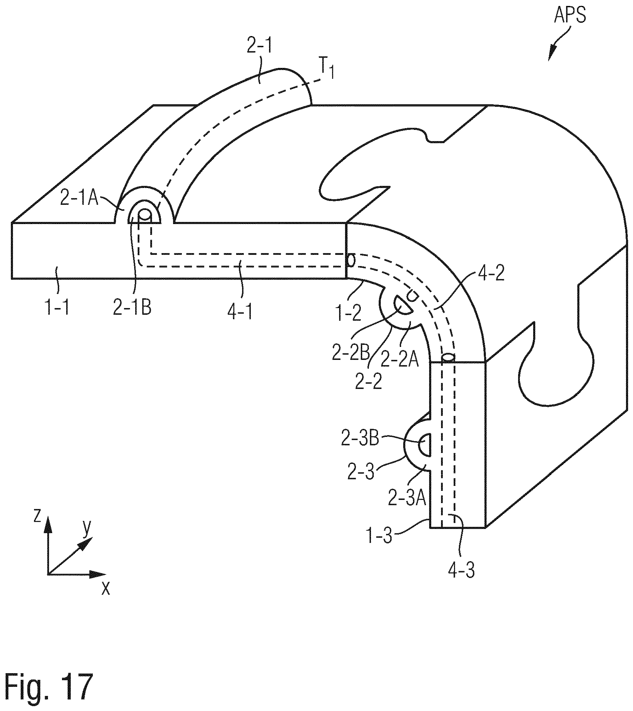

Fig. 17 shows a further perspective view on an aircraft panel structure APS made of panel members 1-i according to the first aspect of the present invention. In the shown example, the aircraft panel structure APS comprises three panel members 1-1, 1-2, 1-3 presenting a surface of the aircraft panel structure APS. In the illustrated embodiment, a first panel member 1-1 comprises a medium conduit 2-1 being force flow oriented along a stress trajectory T1 on the outer surface of the aircraft panel structure. The second panel member 1-2 comprises a medium conduit 2-2 on the inner surface of the aircraft panel structure. The second panel member 1-2 connects the first panel member 1-1 with a third panel member 1-3, whereas the first panel member 1-1 extends along an x-axis and the third panel member 1-3 is oriented along a z-axis perpendicular to the first panel member 1-1 as illustrated in Fig. 17. The intermediate panel member 1-2 comprises in the illustrated embodiment protrusions fitting into corresponding recessions of the other panel members 1-1, 1-3 to provide jigsaw puzzle mechanical links between the panel members. In the illustrated exemplary embodiment, the first panel member 1-1 comprises an integrated medium channel 4-1 in x-direction, the second panel member 1-2 comprises an integrated fluid channel 4-2 having a 90 degree curve and the third panel member 1-3 comprises an integrated fluid channel 4-3 in z-direction. The jigsaw puzzle links allow an easy and fast assemblage of the aircraft panel structure APS as illustrated in Fig. 17. The integrated medium channels 4-i are formed such that they fit together after assembly and form a long medium channel 4-1, 4-2, 4-3 connecting the cores 2-iB of the three different medium conduits 2-i as shown in Fig. 17. As can be seen, the aircraft panel structure APS forms a modular system consisting of fitting panel members 1-c. The modular panel members 1-i comprise protrusions and recessions being complementary to each other allowing fast and easy assemblage by means of jigsaw puzzle mechanical links.

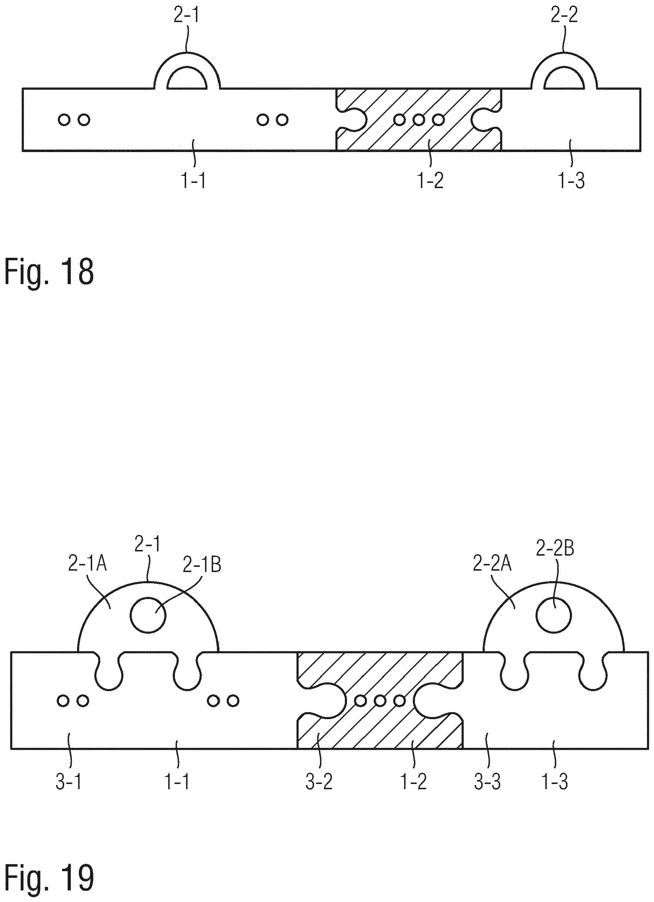

Fig. 18 shows a cross section through an exemplary embodiment of an aircraft panel structure APS made of panel members 1-i according to the first aspect of the present invention. According to the invention, the first and third panel member 1-1, 1-3 comprise a protrusion which can be inserted in a corresponding recession of the intermediate panel member 1-2 as shown in Fig. 18. The aircraft panel structure of Fig. 18 is a flat aircraft panel structure APS consisting of three flat panel members 1-i. Some or all panel members 1-c can comprise integrated medium channels 4-i as shown in Fig. 18.

Fig. 19 shows a further exemplary embodiment of a flat aircraft panel structure APS comprising three assembled panel members 1-i according to the first aspect of the present invention. In the illustrated embodiment, the first panel member 1-1 comprises recessions into which protrusions of a first medium conduit 2-1 are fitted.

Also, the second medium conduit 2-2 forms a separate part having protrusions which are fitted into corresponding recessions of the flat panel medium plate 3-3 of third panel member 1-3. The attached medium conduits 2-i can in this way integrally formed with the corresponding panel member 1-i. In an alternative embodiment, the medium conduits 2-1, 2-2 as shown in Fig. 18 are made of a different material than the plates 3-1, 3-2 of the corresponding panel members 1-i and are manufactured together with the plates 3-1, 3-2 in an additive manufacturing process by a three-dimensional printer.

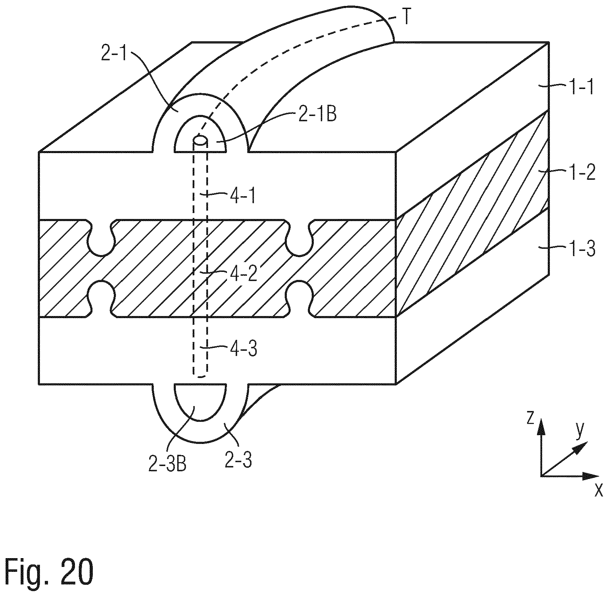

Fig. 20 shows a further exemplary embodiment of an aircraft panel structure APS comprising modular panel members 1-i. In the shown embodiment, two panel members 1-1, 1-3 are connected mechanically to each other by means of an intermediate panel member 1-2 having recessions into which protrusions of the corresponding panel members 1-1, 1-3 can be fitted. The different panel members 1-1, 1-2, 1-3 form after assembly several layers of the illustrated aircraft panel structure. The first and third panel member 1-1, 1-3 comprises in the shown exemplary embodiment a medium conduit 2-1, 2-3 which is integrally formed with the corresponding panel member. In the shown exemplary embodiment of the aircraft panel structure, each panel member 1-i comprises a vertical medium channel 4-i in z-directions which can be used to connect the medium conduit cores 2-1B, 2-3B of the opposing medium conduits 2-1, 2-3 on the opposing sides of the aircraft panel structure as illustrated in Fig. 20.

Fig. 21A shows a further exemplary embodiment of a panel member 1 according to the first aspect of the present invention. In the illustrated embodiment, the panel member 1 comprises a medium conduit 2 being integrally formed with the panel member 1 and comprising an integrated functional element 6-1 configured to perform a function on the basis of the conducted medium. Further, in the illustrated embodiment, the panel member 1 comprises a flat panel member plate 3 having an integrated medium channel 4 comprising a further integrated functional element 6-2. The functional elements 6-1, 6-2 are configured to perform a function of an aircraft supply system ASS on the basis of the conducted medium M transported within the medium conduit core 2B and/or the medium channel 4.

In a possible embodiment, the functional elements 6-1, 6-2 illustrated in Fig. 21A can comprise valve elements, sensor elements, actuator elements, flow control elements, structural health monitoring elements, steering and control elements, cooling and/or heating elements, media support elements, filter elements and/or pressure control elements. The functional elements 6-i illustrated in Fig. 21A are manufactured in a preferred embodiment in an integrated additive manufacturing process by an three-dimensional printer when manufacturing the panel member 1. The functional elements 6-1, 6-2 can be actor elements controlled in response to a control signal transported through a medium conduit core 2B of a medium conduit 2 or transported through an integrated medium channel 4. Further, functional elements 6-i can comprise sensor elements providing sensor data transported as a sensor signal through a medium core 2B of a medium conduit 2 or of an integrated channel 4. Functional elements 6-i can also comprise energy harvesting elements which are adapted to generate energy from mechanical stress within the panel member plate 3 or the integrally formed medium conduit 2. The functional elements 6-i can also comprise elements which transform radiation falling on the surface of the panel member plate 3 into electrical energy. In a possible embodiment, the functional elements 6-i are adapted to transform energy transported by sunrays into electrical energy transported by medium conduit cores 2B or integrated channels 4 to other functional elements 6 within the same or other panel members 1 of the aircraft panel structure APS.

The functional actuator elements 6-1 can also comprise elements to insert deliberately mechanical stress into the structure, e.g. for structural health monitoring and/or mechanical stress compensation. The functional elements can further comprise crack stopping elements.

Fig. 21B shows a simple integrated functional element 6 formed by an integrally manufactured grid structure within the core 2B of the medium conduit 2. The functional element 6 provides the function of filtering the medium M flowing through the core 2B.

Fig. 21C shows a further exemplary functional element 6 forming a valve and comprising integrally manufactured flexible valve flaps allowing the flow of the medium M within the core 2B in one direction.

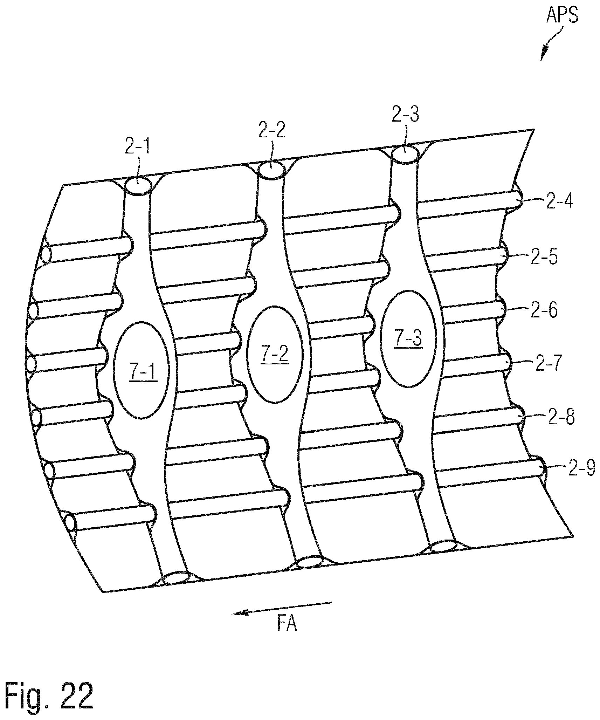

Fig. 22 shows a perspective view on an aircraft panel structure APS comprising medium conduits or ducts 2-1, 2-2, 2-3 along the curved shape of the curved aircraft panel structure which can form part of the aircraft fuselage. Along the longitudinal axis of the fuselage FA, further medium conduits 2-4 to 2-9 can be provided connecting the medium conduits 2-1, 2-2, 2-3 with each other. In the illustrated embodiment, the integrally formed medium conduits 2-1, 2-2, 2-3 are configured to stiffen a periphery of corresponding openings 7-1, 7-2, 7-3 within the aircraft panel fuselage. The medium conduits 2-1, 2-2, 2-3 are formed in the illustrated embodiment such that they at the same time form a frame of an aircraft window opening 7-i.

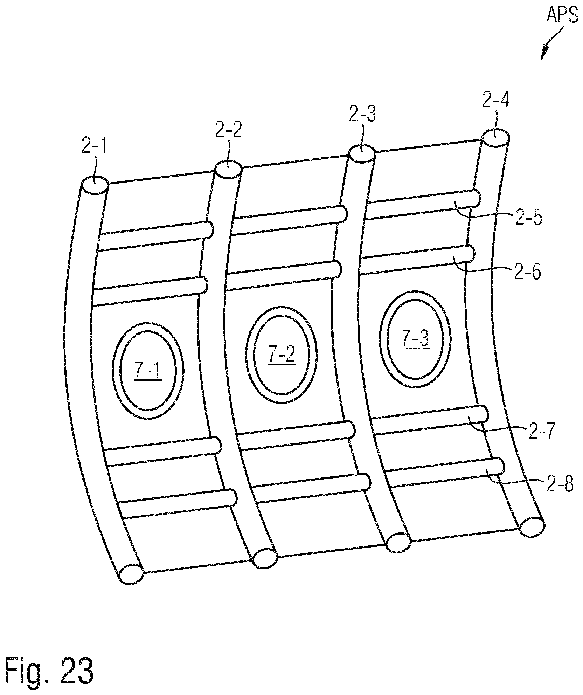

Fig. 23 shows an alternative aircraft panel structure APS with an aircraft window opening 7-i formed within the curved panel plates of the panel members.

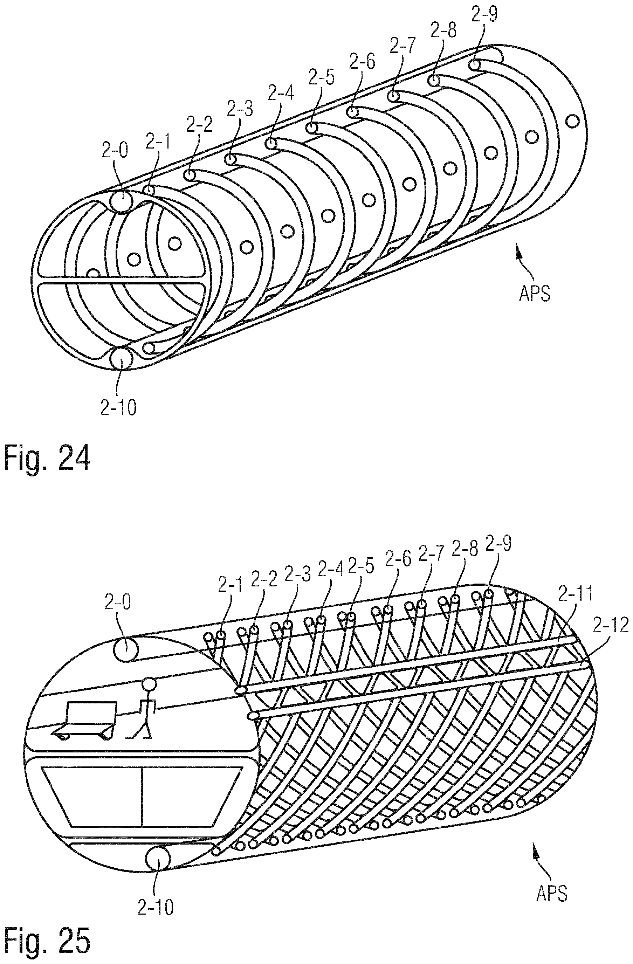

Fig. 24 shows a perspective view on an aircraft frame structure comprising a plurality of ducts or medium conduits 2-i connecting an upper main medium conduit 2-0 with a lower main medium conduit 2-10, wherein the two main conduits of the aircraft supply system ASS are directed along the main axis FA of the aircraft fuselage as illustrated in Fig. 24. Between the curved medium conduits 2-1 to 2-9 main medium conduits 2-0, 2-10 can be provided.

Fig. 25 shows a further exemplary aircraft fuselage panel structure comprising a plurality of medium conduits connecting an upper main medium conduit 2-0 with a lower main medium conduit 2-10 within the fuselage. The connecting medium conduits 2-i are oriented along stress trajectories T preferably at an 45° angle as illustrated in Fig. 25. Besides the two main medium conduits 2-0, 2-10 extending along the fuselage axis FA, further conduits can be provided and can form an integrated aircraft window grid as illustrated in Fig. 25.

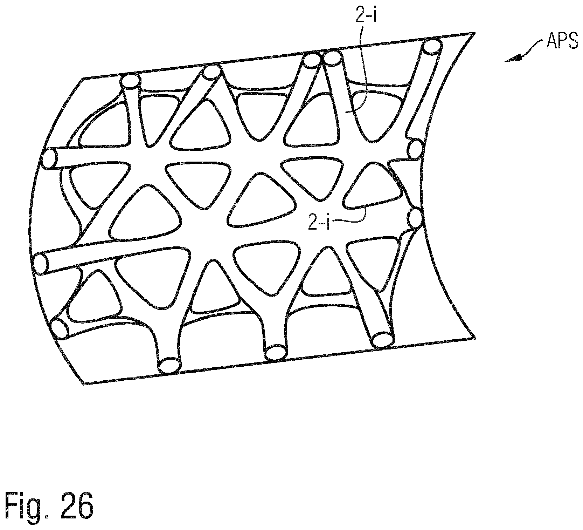

Fig. 26 shows a further exemplary aircraft panel fuselage structure comprising medium conduits forming a web of conduits which at the same time forms a frame structure for aircraft openings, in particular aircraft window openings. The medium conduits 2 are designed such that they conduct the different media M of the aircraft supply systems ASS, but stiffen simultaneously the aircraft panel structure APS of the aircraft. The areas between the conduits 2 can be used for aircraft windows or can form the skin of the aircraft fuselage. In the illustrated embodiment of Fig. 26, the aircraft window openings are triangular. In contrast, in the embodiment of Fig. 22, the aircraft window openings are circular or elliptic.

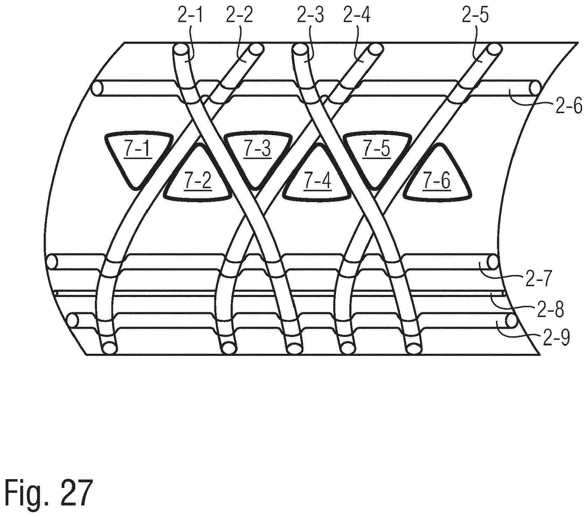

Fig. 27 shows a further exemplary aircraft panel fuselage structure with circumferential medium conduits 2 oriented along stress trajectories T of the fuselage and further medium conduits 2 oriented along the main longitudinal axis FA of the fuselage.

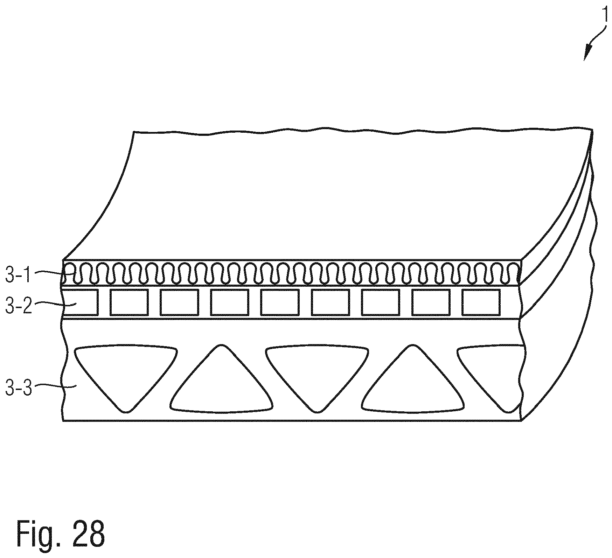

Fig. 28 shows a further exemplary embodiment of a panel member 1 presenting a surface area of an aircraft panel structure APS comprising several integrated insulation layers 3-1, 3-2, 3-3 providing thermal insulation, acoustic insulation, electric insulation or electromagnetic insulation.

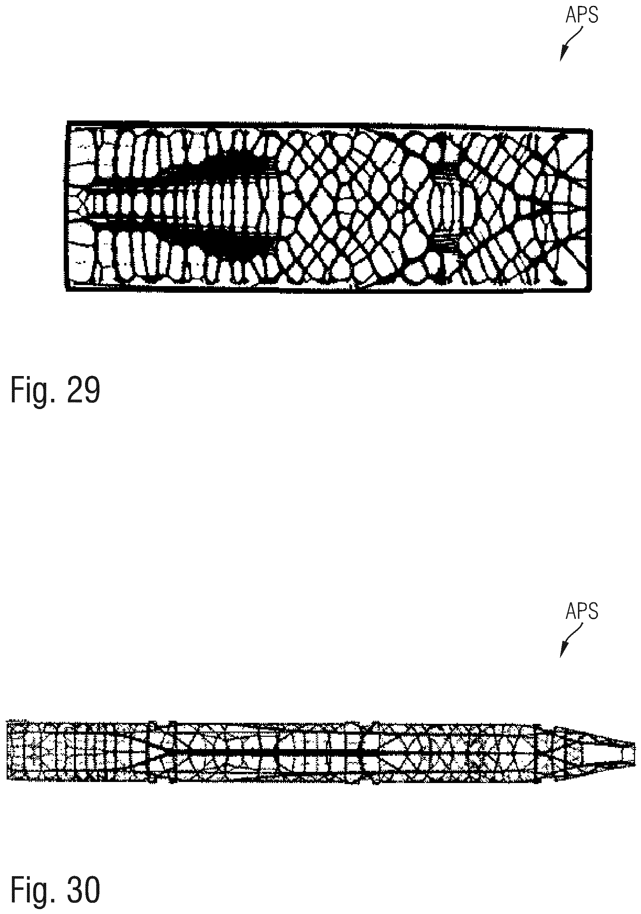

Fig. 29 shows an exemplary embodiment of a complex aircraft panel structure APS comprising medium conduits 2 which are integrally formed with the panel members 1 and which are oriented along stress trajectories T to provide efficient stiffening of the aircraft panel structure APS. As can be seen in the illustrated embodiment, the medium conduits 2-i of the panel member or panel members 1 form a complex web of conduits optimized for the mechanical stress forces within the aircraft frame.

Fig. 30 shows a further trajectory-based layout of stiffening an aircraft panel structure APS of an airframe which can be based on computer-aided optimization analysis. The aircraft panel structure illustrated in Fig. 30 can comprise several panel members 1 presenting a surface area of the aircraft panel structure APS. As illustrated in Figs. 29, 30 the cross section of the different medium conduits 2 along the stress trajectories T in the fuselage aircraft panel structure can vary. Main supply medium conduits comprise a bigger cross section than medium conduits in the periphery of the respective air supply system. Cross sections can be optimized at each location to local entities of the respective aircraft supply system.

The panel member 1 according to the first aspect of the present invention can represent a surface area of an aircraft panel fuselage structure, but also an aircraft panel wing structure or an aircraft panel empennage structure. The panel member 1 according to the first aspect of the present invention can be used for primary structures of the aircraft frame such as fuselage, wing or empennage, but also for secondary structures such as flaps of the aircraft.

The stress trajectories T indicate the direction of the principle mechanical stresses in the structure. The stress trajectories T can represent optimal flows of the tension and/or compression. The size and shape of the manufactured panel member 1 can be optimized in form, size, shape and stiffness, wherein the cross section of the medium conduits 2 integrally formed with the panel member 1 can be variable along the stress trajectories T and enable a weight-optimized design of the aircraft panel structure. The stress trajectories T indicate the orientation and relative magnitude of the major and minor principal stresses. Isostatics or stress trajectories form a system of curves which at each point form tangents to the principal axes of mechanical stress. The stiffening medium conduits 2 are not rectangular or orthogonal like conventional stiffening structure elements including ribs, stringer or frame elements, but force flow oriented.

In a possible embodiment, the aircraft panel structure APS formed by the panel members 1 according to the first aspect of the present invention is isostatic. In the isostatic aircraft panel structure APS, all stiffening structures comprise the same load level in terms of stress, local stiffness and moment of inertia. The panel members 1 according to the present invention are manufactured in a preferred embodiment by three-dimensional printing so that the panel members or airframe components allow an advanced bionic design of the aircraft frame. The aircraft frame panel elements are manufactured additive with integrated stiffening medium conduits 2, wherein the stiffening conduits 2 are optimized at each location of the aircraft panel structure APS with varying cross sections and dimensions. Each cross section can be optimized at each location of the aircraft frame structure for the local mechanical load. It is possible to apply multi-material printing to adapt the panel member material to the structural requirements and to the local loads.

The panel member 1 forms a modular member and can comprise an individual mechanical stiffness, density, moment of inertia and shape. During manufacturing of the panel member 1, mechanical tolerances and fatigue features can also be imprinted like multiple load paths or structural health monitoring elements. Further, tubes, channels for active or passive cooling can be imprinted in the manufactured panel member 1. Further, it is possible to integrate mechanical and/or electrical systems into the airframe structure of the aircraft. A combination of additive (3D printing) and subtractive manufacturing can be used to provide high quality and high performance aircraft panel structures APS. The panel member 1 according to the present invention diminishes the weight of the aircraft significantly allowing to safe fuel during flight. Further, the panel member 1 according to the present invention allows to integrate different aircraft supply systems ASS into the aircraft panel structure APS. Consequently, the time-consuming assembly of different complex aircraft supply systems ASS can be avoided to a large extent. The panel member 1 according to the present invention allows to replace frames, for instance for aircraft windows or aircraft openings. The replacement of aircraft opening frames reduces the weight of the aircraft further. Since the tubes and pipes of conventional aircraft supply systems ASS are integrated into the aircraft panel structure APS, more space for other components or for increasing the size of the passenger or cargo room becomes available. The panel member 1 according to the present invention reduces the weight of the aircraft, but also increases the stiffness and mechanical robustness of the aircraft panel structure APS. The performance and lifetime of the aircraft panel structure APS is increased consequently. The medium conduits 2 of the panel members 1 are formed in a way such that they can be used as window frames to deliver a required stiffness for the surrounding structure of the window panes.

The invention provides according to a second aspect an aircraft supply system ASS, wherein the aircraft supply system comprises a plurality of medium conduits 2 each configured to conduct a medium, wherein the medium conduits are integrally formed with panel members 1 according to the first aspect of the present invention. The aircraft supply system ASS according to the second aspect of the present invention can comprise an air conditioning system, a medium supply system, a waste water system, a potable water system, a pneumatic air distribution system, a hydraulic system, a power supply system, a data transport system, an energy storage system, an energy transport system, an energy harvesting system and/or a medium storage system. The aircraft supply system ASS can be used for storage and/or transport of a medium such as fluids or gases. The aircraft supply system ASS can also be used as a pressure storage system. Further possible embodiments of the aircraft supply system ASS are a system for structural health monitoring of the airframe or a system for morphing structures with integrated actuators where energy is transformed into motion or vice versa. The aircraft supply system ASS can be used to store energy. This energy storage system can be an electric, mechanical, electromagnetic or electromechanical energy storage system. The aircraft supply system ASS can also comprise an integrated energy harvesting system adapted to harvest energy on mechanical stresses in the aircraft panel structure and/or electromagnetic waves falling on the surface of the panel members within the panel structure. The panel members 1 of the aircraft panel structure can comprise integrated elements, for instance coils and/or condensators, transformators or wireless power devices. In the panel member 1 according to the first aspect of the present invention, crack stopping devices can be integrated. In a still further possible embodiment, the aircraft panel structure formed by the panel member 1 according to the present invention can provide an integrated passenger catering, air supply, oxygen supply, fluid supply and/or liquid distribution. In a still further possible embodiment, the panel member 1 according to the first aspect of the present invention can comprise additive manufactured screens and monitors and/or loudspeakers forming layers of the panel member surface. The panel member 1 can also comprise shock-absorbing and active vibration damping layers. A peak stress free design with stress-optimized shapes can be applied. In a possible embodiment, the panel member 1 according to the first aspect of the present invention comprises self-repairing as well as self-adapting structures or layers. The panel member 1 can comprise a pre-deforming structure which are load case adapted, e.g. during landing or start of the aircraft. In a possible embodiment, a self-stiffness adaption or shock damping and flatter damping can be provided. In a possible embodiment, the panel member 1 comprises integrated hydraulic actuators or pneumatic actuators or electroactive polymers. The panel member 1 according to the present invention can be used for aeroplanes but also for helicopters.

### List of reference numerals and signs

- 1: Panel member
- 2: Medium conduit
- 2A: Conduit wall
- 2B: Conduit core
- 3: Plate
- 4: Medium channel
- 5: Protrusion
- 6: Functional element
- 7: Opening

## Claims

1. An aircraft panel member (1) presenting a surface area of an aircraft panel structure, said panel member (1) comprising
at least one medium conduit (2) which is integrally formed with said panel member (1),
wherein said medium conduits (2) are configured to conduct the same or different media and configured to stiffen said aircraft panel structure, wherein said panel member (1) is an additive manufactured 3-D-printed panel member (1), and
wherein said panel member (1) comprises protrusions fitting into corresponding recessions of other panel members to provide jigsaw puzzle mechanical links with the other panel members.

2. The panel member according to claim 1,
wherein said integrally formed medium conduits (2) are configured to stiffen a periphery of an opening (7) in said aircraft panel structure, in particular to stiffen the periphery of an aircraft window opening or the periphery of an aircraft door opening.

3. The panel member according to any of the preceding claims,
wherein said panel member (1) is an exterior panel member which presents a surface area of an exterior aircraft panel structure or an interior panel member of an interior aircraft panel structure.

4. The panel member according to any of the preceding claims,
wherein said panel member (1) is formed by a flat plate, a curved plate or a hollow cylinder.

5. The panel member according to any of the preceding claims,
wherein said at least one stiffening medium conduit (2) is configured to conduct the same or different media of aircraft supply systems.

6. The panel member according to any of the preceding claims,
wherein said panel member (1) comprises integrated channels (4) configured to conduct the same or different media of aircraft supply systems.

7. The panel member according to claim 5 or 6,
wherein the media conducted by said stiffening medium conduits (2) and/or by said integrated channels (4) comprise
water, in particular potable water or waste water,
a gas, in particular pressurized air,
a fluid,
hydraulic oil,
a fuel, in particular kerosine,
electrical power supply current and/or
information data.

8. The panel member according to any of the preceding claims,
wherein said panel member (1) comprises
a fuselage panel member of an aircraft fuselage,
a wing panel member of an aircraft wing or
an empennage panel member of an aircraft empennage.

9. The panel member according to any of the preceding claims,
wherein said panel member (1) comprises
at least one integrated insulation layer for thermal insulation and/or
an integrated insulation layer for electrical insulation and/or
an integrated insulation layer for sound insulation and/or
an integrated insulation layer for electromagnetic wave insulation.

10. The panel member according to any of the preceding claims,
wherein said panel member (1) comprises at least one integrated heating and/or cooling protrusion (5).

11. The panel member according to any of the preceding claims,
wherein said panel member (1) comprises a fibre reinforced polymer, composite material, in particular a carbon fibre reinforced polymer, CFRP, a glass fibre reinforced polymer, GFRP or plastic or a metal compound or monolithic materials comprising plastic materials or metals.

12. The panel member according to any of the preceding claims,
wherein the at least one stiffening medium conduit (2) is force flow oriented along a stress trajectory (T).

13. The panel member according to claim 12,
wherein the force flow oriented stiffening medium conduit (2) integrally formed with said panel member (1) comprises a constant or variable cross section along said stress trajectory (T).

14. A window grid for aircraft window openings,
wherein said window grid is formed by panel members (1) according to one of the preceding claims.

15. An aircraft supply system of an aircraft,
said aircraft supply system comprising medium conduits (2) each configured to conduct a medium,
wherein said medium conduits (2) are integrally formed within panel members (1) according to one of the preceding claims 1 to 13.

16. The aircraft supply system according to claim 15,
wherein said medium conduits (2) and/or channels (4) comprise integrated functional elements configured to perform a function on the basis of the media conducted by said conduits and/or channels,
said functional elements comprising
valve elements, sensor elements, actuator elements, flow control elements, structural health monitoring elements, crack stopping elements, mechanical stress insertion elements, steering and control elements, cooling and/or heating elements, media support elements, filter elements, pressure control elements.

17. The aircraft supply system according to claim 15 or 16,
wherein said aircraft supply system comprises
- an air conditioning system,
- a medium supply system,
- a waste water system,
- a potable water system,
- a pneumatic air distribution system,
- a hydraulic system,
- a power supply system,
- a data transport system,
- an energy storage system,
- an energy transport system,
- an energy harvesting system,
- a medium storage system.

18. An aircraft fuselage comprising assembled panel members (1) according to one of the preceding claims 1 to 13.

## Patentansprüche

1. Flugzeugpaneelelement (1), das eine Oberfläche einer Flugzeugpaneelstruktur darstellt, wobei das Paneelelement (1) mindestens eine Mediumleitung (2) umfasst, die integral mit dem Paneelelement (1) ausgebildet ist, wobei die Mediumleitungen (2) dafür ausgestaltet sind, das gleiche Medium oder verschiedene Medien zu transportieren, und dafür ausgebildet sind, die Flugzeugpaneelstruktur zu versteifen, wobei das Paneelelement (1) ein additiv hergestelltes 3D-gedrucktes Paneelelement (1) ist, und wobei das Paneelelement (1) Vorsprünge umfasst, die in entsprechende Vertiefungen anderer Paneelelemente passen, um mechanische Verbindungen nach Puzzle-Art mit den anderen Paneelelementen zu bilden.

2. Paneelelement nach Anspruch 1, wobei die ausgebildet ausgebildeten Mediumleitungen (2) dafür konfiguriert sind, eine Peripherie einer Öffnung (7) in der Flugzeugpaneelstruktur zu versteifen, insbesondere die Peripherie einer Flugzeugfensteröffnung oder die Peripherie einer Flugzeugtüröffnung zu versteifen.

3. Paneelelement nach einem der vorangehenden Ansprüche, wobei das Paneelelement (1) ein äußeres Paneelelement ist, das eine Oberfläche einer äußeren Flugzeugpaneelstruktur darstellt oder ein inneres Paneelelement einer inneren Flugzeugpaneelstruktur ist.

4. Paneelelement nach einem der vorangehenden Ansprüche, wobei das Paneelelement (1) durch eine flache Platte, eine gekrümmte Platte oder einen hohlen Zylinder gebildet wird.

5. Paneelelement nach einem der vorangehenden Ansprüche, wobei die mindestens eine versteifende Mediumleitung (2) dafür ausgebildet ist, das gleiche Medium oder verschiedene Medien von Flugzeugversorgungssystemen zu transportieren.

6. Paneelelement nach einem der vorangehenden Ansprüche, wobei das Paneelelement (1) integrierte Kanäle (4) umfasst, die dafür ausgebildet sind, das gleiche Medium oder verschiedene Medien von Flugzeugversorgungssystemen zu transportieren.

7. Paneelelement nach Anspruch 5 oder 6, wobei die Medien, die durch die versteifenden Mediumleitungen (2) und/oder durch die integrierten Kanäle (4) transportiert werden, Folgendes umfassen:
Wasser, insbesondere Trinkwasser oder Abwasser,
ein Gas, insbesondere Druckluft,
ein Fluid,
Hydrauliköl,
einen Kraftstoff, insbesondere Kerosin,
elektrischen Versorgungsstrom, und/oder
Informationsdaten.

8. Paneelelement nach einem der vorangehenden Ansprüche, wobei das Paneelelement (1) Folgendes umfasst:
ein Rumpfpaneelelement eines Flugzeugrumpfes,
ein Flügelpaneelelement eines Flugzeugflügels oder
ein Leitwerkspaneelelement eines Flugzeugleitwerks.

9. Paneelelement nach einem der vorangehenden Ansprüche, wobei das Paneelelement (1) Folgendes umfasst:
mindestens eine integrierte Isolierschicht zur Wärmedämmung, und/oder
eine integrierte Isolierschicht zur elektrischen Isolierung, und/oder
eine integrierte Isolierschicht zur Schalldämmung, und/oder
eine integrierte Isolierschicht zur Isolierung elektromagnetischer Wellen.

10. Paneelelement nach einem der vorangehenden Ansprüche, wobei das Paneelelement (1) mindestens einen integrierten Heiz- und/oder Kühlvorsprung (5) umfasst.

11. Paneelelement nach einem der vorangehenden Ansprüche, wobei das Paneelelement (1) Folgendes umfasst: ein faserverstärktes Polymer, ein Verbundmaterial, insbesondere ein kohlenstofffaserverstärktes Polymer (CFRP), ein glasfaserverstärktes Polymer (GFRP), oder Kunststoff, oder ein Metallverbundwerkstoff, oder monolithische Materialien, die Kunststoffmaterialien oder Metalle umfassen.

12. Paneelelement nach einem der vorangehenden Ansprüche, wobei die mindestens eine versteifende Mediumleitung (2) entlang einer Belastungstrajektorie (T) kraftflussorientiert ist.

13. Paneelelement nach Anspruch 12, wobei die kraftflussorientierte versteifende Mediumleitung (2), die integral mit dem Paneelelement (1) ausgebildet ist, einen konstanten oder variablen Querschnitt entlang der Belastungstrajektorie (T) umfasst.

14. Fenstergitter für Flugzeugfensteröffnungen, wobei das Fenstergitter durch Paneelelemente (1) nach einem der vorangehenden Ansprüche gebildet wird.

15. Flugzeugversorgungssystem eines Flugzeugs, wobei das Flugzeugversorgungssystem Mediumleitungen (2) umfasst, die jeweils dafür ausgebildet sind, ein Medium zu transportieren,
wobei die Mediumleitungen (2) integral innerhalb von Paneelelementen (1) nach einem der vorangehenden Ansprüche 1 bis 13 ausgebildet sind.

16. Flugzeugversorgungssystem nach Anspruch 15, wobei die Mediumleitungen (2) und/oder Kanäle (4) integrierte Funktionselemente umfassen, die dafür ausgebildet sind, eine Funktion auf der Basis der Medien, die durch die Leitungen und/oder Kanäle transportiert werden, auszuführen, wobei die Funktionselemente Folgendes umfassen:
Ventilelemente, Sensorelemente, Aktuatorelemente, Durchflusssteuerungselemente,
Strukturintegritätsüberwachungselemente, Rissstopp-Elemente, mechanische Belastungseintragselemente, Lenk- und Steuerelemente, Kühl- und/oder Heizelemente, Medienunterstütungselemente, Filterelemente, Drucksteuerungselemente.

17. Flugzeugversorgungssystem nach Anspruch 15 oder 16, wobei das Flugzeugversorgungssystem Folgendes umfasst:
- ein Klimatisierungssystem,
- ein Medienversorgungssystem,
- ein Abwassersystem,
- einer Trinkwassersystem,
- ein Druckluftverteilungssystem,
- ein Hydrauliksystem,
- ein Stromversorgungssystem,
- ein Datentransportsystem,
- ein Energiespeichersystem,
- ein Energietransportsystem,
- ein Energiegewinnungssystem,
- ein Medienspeichersystem.

18. Flugzeugrumpf, der zusammengesetzte Paneelelemente (1) nach einem der vorangehenden Ansprüche 1 bis 13 umfasst.

## Revendications

1. Élément de panneau d'aéronef (1) présentant une aire de surface de structure de panneau d'aéronef, ledit élément de panneau (1) comprenant :
au moins un conduit de transport de milieu (2) qui est formé d'une seule pièce avec ledit élément de panneau (1),
dans lequel lesdits conduits de transport de milieux (2) sont conçus pour conduire des milieux identiques ou
différents et sont conçus pour raidir ladite structure de panneau d'aéronef,
dans lequel ledit élément de panneau (1) est un élément de panneau de fabrication additive imprimé en 3 dimensions (1), et
dans lequel ledit élément de panneau (1) comprend des saillies s'insérant dans des évidements correspondants d'autres éléments de panneau pour assurer des liaisons mécaniques de type puzzle avec les autres éléments de panneau.

2. Élément de panneau selon la revendication 1,
dans lequel lesdits conduits de transport de milieux formés d'une seule pièce (2) sont conçus pour raidir une périphérie d'ouverture (7) dans ladite structure de panneau d'aéronef, en particulier pour raidir la périphérie d'une ouverture de hublot d'aéronef ou la périphérie d'une ouverture de porte d'aéronef.

3. Élément de panneau selon l'une quelconque des revendications précédentes,
dans lequel ledit élément de panneau (1) est un élément de panneau extérieur qui présente une aire de surface d'une structure extérieure de panneau d'aéronef ou un élément de panneau intérieur d'une structure intérieure de panneau d'aéronef.

4. Élément de panneau selon l'une quelconque des revendications précédentes,
dans lequel ledit élément de panneau (1) est constitué d'une plaque plane, d'une plaque cintrée ou d'un cylindre creux.

5. Élément de panneau selon l'une quelconque des revendications précédentes,
dans lequel ledit au moins un conduit de transport de milieu et de raidissement (2) est conçu pour conduire les milieux identiques ou différents de systèmes d'alimentation d'aéronef.

6. Élément de panneau selon l'une quelconque des revendications précédentes,
dans lequel élément de panneau (1) comprend des canaux intégrés (4) conçus pour conduire les milieux identiques ou différents de systèmes d'alimentation d'aéronef.

7. Élément de panneau selon la revendication 5 ou 6,
dans lequel les milieux conduits par lesdits conduits de transport de milieux et de raidissement (2) et/ou par lesdits canaux intégrés (4) comprennent :
l'eau, en particulier l'eau potable ou les eaux usées,
un gaz, en particulier l'air comprimé,
un fluide,
de l'huile hydraulique,
un carburant, en particulier le kérosène,
un courant d'alimentation électrique et/ou des données d'information.

8. Élément de panneau selon l'une quelconque des revendications précédentes,
dans lequel ledit élément de panneau (1) comprend :
un élément de panneau de fuselage d'un fuselage d'aéronef,
un élément de panneau d'aile d'une aile d'aéronef ou
un élément de panneau d'empennage d'un empennage d'aéronef.

9. Élément de panneau selon l'une quelconque des revendications précédentes,
dans lequel ledit élément de panneau (1) comprend :
au moins une couche isolante intégrée destinée à l'isolation thermique et/ou
une couche isolante intégrée destinée à l'isolation électrique et/ou
une couche isolante intégrée destinée à l'isolation acoustique et/ou
une couche isolante intégrée destinée à l'isolement contre les ondes électromagnétiques.

10. Élément de panneau selon l'une quelconque des revendications précédentes,
dans lequel ledit élément de panneau (1) comprend au moins une saillie intégrée de chauffage et/ou de refroidissement (5).

11. Élément de panneau selon l'une quelconque des revendications précédentes,
dans lequel ledit élément de panneau (1) comprend un polymère renforcé par des fibres, un matériau composite, en particulier un polymère renforcé par des fibres de carbone, CFRP (*carbon fibre reinforced polymer*), un polymère renforcé par des fibres de verre, GFRP (*glass fibre reinforced polymer*), ou un composé métallique ou de matières plastiques ou encore des matériaux monolithiques comprenant des matières plastiques ou des métaux.

12. Élément de panneau selon l'une quelconque des revendications précédentes,
dans lequel le(s) conduit(s) de transport de milieu(x) et de raidissement (2) est ou sont orienté(s) suivant le sens de l'écoulement forcé le long d'une trajectoire de contrainte (T).

13. Élément de panneau selon la revendication 12,
dans lequel le conduit de transport de milieu et de raidissement (2) orienté suivant le sens de l'écoulement forcé, formé d'une seule pièce avec ledit élément de panneau (1) comprend une section transversale constante ou variable le long de ladite trajectoire de contrainte (T).

14. Grille de hublot destinée à des ouvertures de hublots d'aéronef,
dans laquelle ladite grille de hublot est formée par des éléments de panneau (1) selon l'une des revendications précédentes.

15. Système d'alimentation pour aéronef d'un aéronef,
ledit système d'alimentation pour aéronef comprenant des conduits de transport de milieux (2) conçus chacun pour conduire un milieu,
dans lequel lesdits conduits de transport de milieux (2) sont formés d'une seule pièce avec des éléments de panneau (1) selon l'une des revendications 1 à 13 précédentes.

16. Système d'alimentation pour aéronef selon la revendication 15,
dans lequel lesdits conduits (2) et/ou canaux (4) de transport de milieux comprennent des éléments fonctionnels intégrés, conçus pour remplir une fonction, sur la base des fluides conduits par lesdits conduits et/ou canaux,
lesdits éléments fonctionnels comprenant :
des éléments formant soupapes, des éléments formant capteurs, des éléments formant actionneurs, des éléments de régulation de débit, des éléments de surveillance de santé structurale, des éléments d'arrêt de criques, des éléments d'introduction de contraintes mécaniques, des éléments de direction et de commande, des éléments de refroidissement et/ou de chauffage, des éléments de support de milieux, des éléments filtrants, des éléments de régulation de pression.

17. Système d'alimentation pour aéronef selon la revendication 15 ou 16,
dans lequel ledit système d'alimentation pour aéronef comprend :
- un circuit de conditionnement d'air,
- un circuit d'alimentation en fluide,
- un circuit d'évacuation des eaux usées,
- un circuit d'eau potable,
- un circuit pneumatique de distribution d'air,
- un circuit hydraulique,
- un système d'alimentation électrique,
- un système de transport de données,
- un système de stockage d'énergie,
- un système de transport d'énergie,
- un système de collecte d'énergie,
- un système de stockage de milieux.

18. Fuselage d'aéronef comprenant des éléments de panneaux assemblés (1) selon l'une des revendications 1 à 13 précédentes.
